# EUROPEAN PATENT APPLICATION

(11) **EP 1 521 173 A2**
(43) Date of publication of application: **06.04.2005**
(21) Application number: 04255405.5
(22) Date of filing: 07.09.2004
(51) Int. Cl.: G06F 9/44

(54) **Configuration method**

(30) Priority: 30.09.2003 GB 0322897
(71) Applicant: Kabushiki Kaisha Toshiba, Tokyo 105-8001 (JP)
(72) Inventor: Burgess, Rollo, Bristol BS1 4ND (GB)
(74) Representative: Midgley, Jonathan Lee

(57) **Abstract**

A method for configuring a computer apparatus comprising creating a model of a functionality which the computer apparatus is to implement, said model including at least one constraint which any implementation must satisfy; and locating at least one software component implementing the functionality specified by the model. The at least one software component comprises means for returning a value related to the at least one constraint and a component is selected only if said value satisfies said constraint.

## Description

The present invention relates to a method for configuring a computer apparatus, and more particularly to a method foe ensuring that a configuration meets constraints placed upon the system.

Modem communications terminals typically comprise a heterogeneous collection of hardware devices suited to signal processing. Such devices include Digital Signal Processors (DSPs), Application Specific Integrated Circuits (ASICs), and Reconfigurable Hardware (R-HW).

The rapid growth in the field of communications, and in particular in the field of wireless communications has resulted in a number of different protocols being adopted. For example, some telecommunications devices use the GSM (Global System for Mobile communication) protocol, while others use UMTS (Universal Mobile telecommunications service) protocol. Conventional communications terminals, comprise fixed signal processing elements which cannot be reconfigured. Such terminals are therefore not able to alter their behaviour so as to handle one protocol in place of an other, and therefore suffer from problems of flexibility.

Software defined radio allows the operation of a device such as a wireless terminal to be defined at runtime by downloading various software components which execute on suitable microprocessors to affect operation of the terminal. Published US Patent Application US2002/0144134A1 (Watanabe et al) describes one such software defined radio system.

In general terms, the transmitted software allows the baseband behaviour of a terminal to be changed. Changes to baseband behaviour can in some cases be total reconfiguration from one protocol to another, for example configuring a terminal to operate using the GSM protocol in place of the UMTS protocol. Alternatively, partial reconfiguration can be carried out, such that behaviour is affected without changing the operating standard.

WO01/90890 (Roke Manor Research Limited) describes a reconfiguration manager for use in reconfiguring a software defined radio terminal. A reconfiguration handler manages requests from various sources and conducts reconfiguration by downloading appropriate software, and executing this software on appropriate devices within the terminal. WO01/90890 also describes an object-oriented implementation in which suitable classes are downloaded and instantiated to provide the necessary functionality. When reconfiguration results in a first class being replaced with a second class, it is explained that dynamic binding is necessary to support changes in functionality, behaviour and interface.

Communications systems are often hard-realtime systems operating in accordance with strict deadlines, for example, one device must process a signal within a predetermined time period so as to allow a further device to operate on that processed signal. A communications system which does not satisfy all deadlines is considered to be in error. It is therefore important that any software defined radio system provides means to ensures that its implementation of various components will satisfy any time constraints.

It is an object of the present invention to obviate or mitigate at least the problems set out above.

According to a first aspect of the present invention, there is provided a method for configuring a computer apparatus comprising:
creating a model of a behaviour which the computer apparatus is to implement, said model including at least one constraint which any implementation must satisfy; and
locating at least one software component implementing the behaviour specified by the model;
wherein the at least one software component comprises means for returning a value related to the at least one constraint.

The model may comprise a plurality of communicating abstract proxy components, and the at least one software component may comprise a concrete proxy component for each abstract proxy component. Each concrete proxy component may provide a method which can be called to return a value related to the at least one constraint. Each concrete proxy component may implement a common interface, and said interface may specify the method. Each abstract proxy component may be defined as an abstract class which implements the common interface. The or each concrete proxy component corresponding to each abstract proxy component may be a child of that abstract proxy component.

The method may be implemented using the Java® programming language.

The constraint may be an execution time constraint. The constraint may be a power consumption constraint. The constraint may be specified with reference to the model. The constraint may be specified with reference to a single component of the model.

According to a second aspect of the present invention, there is provided a computer apparatus comprising:
means for creating a model of a behaviour which the computer apparatus is to implement, said model including at least one constraint which any implementation must satisfy; and
means for locating at least one software component implementing the behaviour specified by the model;
wherein the at least one software component comprises means for returning a value related to the at least one constraint.

According to a third aspect of the present invention, there is provided a data carrier carrying computer programme code means to cause a computer to:
create a model of a behaviour which the computer apparatus is to implement, said model including at least one constraint which any implementation must satisfy; and locate at least one software component implementing the behaviour specified by the model; wherein the at least one software component comprises means for returning a value related to the at least one constraint.

In the present specification terms normally used in connection with the Java® programming language are used to describe features of the invention. It will be appreciated that the invention is in no way restricted to an implementation using the Java programming language, and terms used to refer to features of the Java programming language should be construed so as to include any equivalent feature of any other programming language.

Embodiments of the present invention will now be described, by way of example, with reference to the accompanying drawings, in which:
Figure 1 is a schematic illustration of a network of communicating wireless communications terminals;
Figure 2 is a schematic illustration showing configuration of the communications terminals of Figure 1, in accordance with the present invention;
Figure 3 is a schematic illustration of part of a communications terminal of Figures 1 and 2 showing configuration in accordance with the present invention in further detail;
Figure 4 is a schematic illustration of the algorithm map of Figure 3; and
Figure 5 is a UML class diagram showing classes used in the configuration of Figure 3.

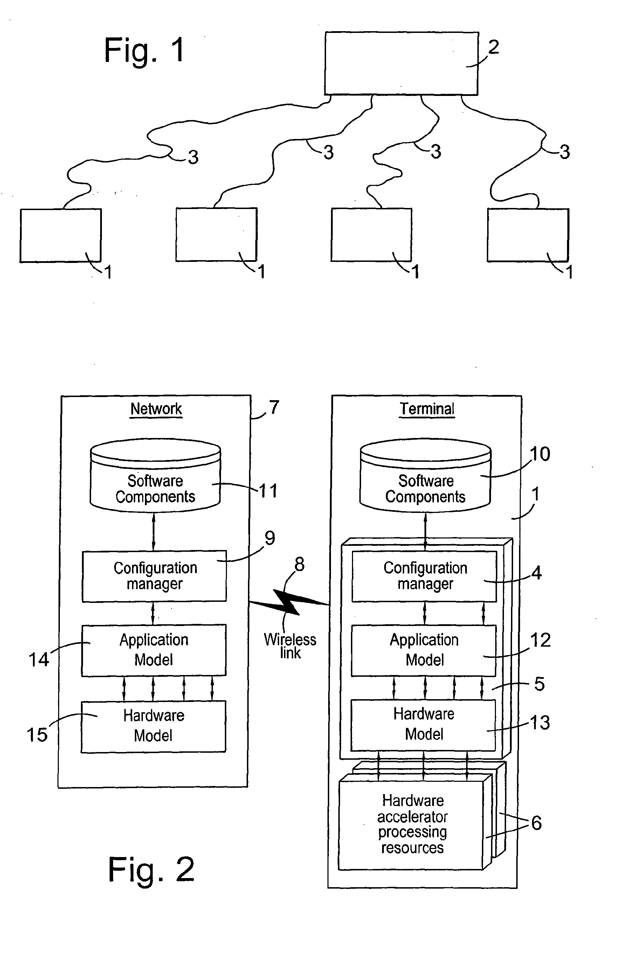

Referring first to Figure 1, there is illustrated a plurality of communications terminals 1, which are configured to communicate with one another, and with other communications terminals not shown in Figure 1. It will be appreciated that the communications terminals can communicate using either wireless or wired means, and may communicate using any one of the wide variety of available communications protocols. Each terminal may, for example, be a mobile telephone, a computer such as a laptop containing suitable communications hardware, or a handheld computer incorporating a mobile telephone.

Figure 1 also includes a configuration device 2 which communicates with the terminals 1 using wired, or more preferably wireless connection means 3. In a known software defined radio system, the configuration device 2 transmits software to one of the communications terminals 1 to affect behaviour of that communications terminal. The software is then executed on microprocessors within the terminal to affect behaviour of the terminal.

The present invention allows the behaviour of the terminal to be affected not only by executing downloaded software on microprocessors within the terminal, but also by configuring suitable hardware accelerators such as Application Specific Integrated Circuits (ASICs) or Reconfigurable Hardware (R-HW).

Figure 2 illustrates configuration in accordance with the present invention. The terminal 1 comprises a local configuration manager 4 executing on a control processor 5. In general, the control processor 5 runs control tasks to affect behaviour of the terminal 1. The terminal 1 also comprises a plurality of hardware accelerator processing resources 6 which are dedicated to signal processing tasks. The hardware accelerator processing resources 6 will typically comprise a heterogeneous collection of hardware devices including digital signal processors (DSPs) which are microprocessors capable of executing code specified in a well defined instruction set, and ASICs which are configured using various parameters.

The terminal communicates with a remote network node 7 by means of a wireless link 8. The network node comprises a remote configuration manager 9 which can be accessed by the terminal 1 by means of the wireless link 8.

The local configuration manager 4 has access to a software component library 10. The remote configuration manager 9 has access to a remote software component library 11. Both the local and remote libraries 10, 11 store details of devices and configurations for those devices which cause the devices to operate in various ways. The remote software component library 11 is typically the master library, to which new devices and device configurations are added. The local software component library 10 contains details of devices and device configurations which are in use or have been used by the terminal 1. Additionally, the local software component library 10 contains device configurations required for default behaviour. Data can be copied between the remote software component library 11 and the local software component library 10 as necessary under the control of the configuration managers 4,9.

In the configuration shown in Figure 2 the system comprises both a local configuration manager 4 and a remote configuration manager 9 which communicate over the wireless link 8. However, it will be appreciated that in some embodiments of the present invention, configuration of the terminal 1 can be carried out solely by the remote configuration manager 9 communicating with the terminal over the wireless link 8, or alternatively solely by the local configuration manager 4.

Configuration using the architecture illustrated in Figure 2 allows not only the use of microprocessors such as DSPs, as in conventional software defined radio, but also the use of faster hardware devices such as ASICs.

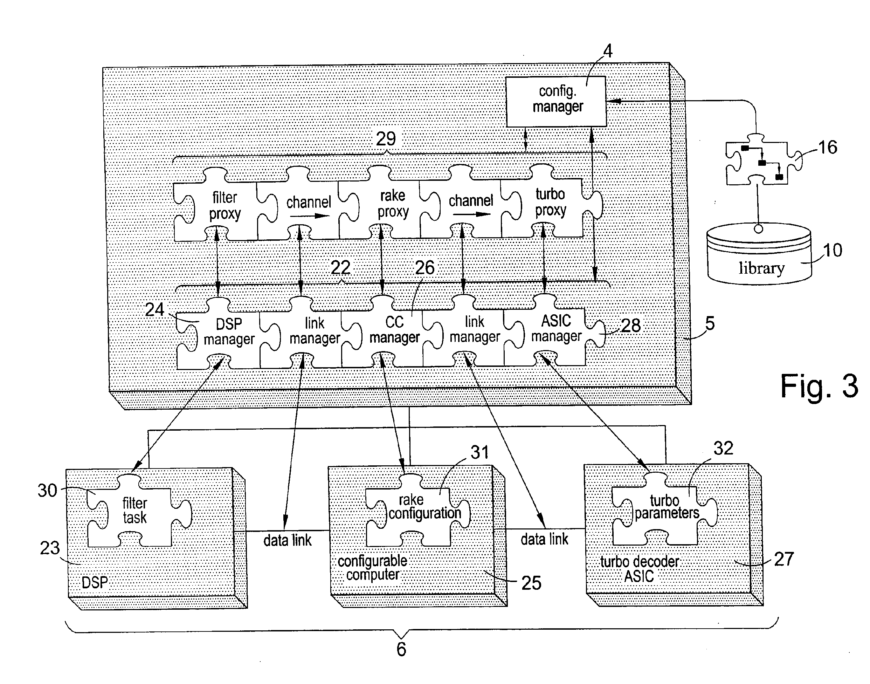

The local configuration manager 4 builds application models 12 and hardware models 13 which are built and manipulated using the control processor 5. The remote configuration manager 9 also has application models 14 and hardware models 15. The function of these models in the configuration of the terminal 1 is described below with reference to Figure 3.

Figure 3 illustrates configuration of the terminal 1, where the terminal is to implement UMTS radio behaviour. An algorithm map 16 representing UMTS base band behaviour is retrieved from the local library 10 by the local configuration manager 4 executing on the control processor 5. This algorithm map describes the functions required to implement UMTS behaviour in terms of a data flow model. The algorithm map 16 describes structure (i.e. the manner in which components are connected to provide the necessary functions) and the interface which each component is required to provide. The algorithm map 16 provides this modelling by representing each required component as an abstract proxy component. Each abstract proxy component defines an interface, but no implementation. It is the function of the configuration manager 4 to locate concrete proxy components which provide the interface defined by the abstract proxy, together with an associated implementation. These concrete proxy components provide the software necessary to implement the behaviour of the algorithm map 16. This process is described below.

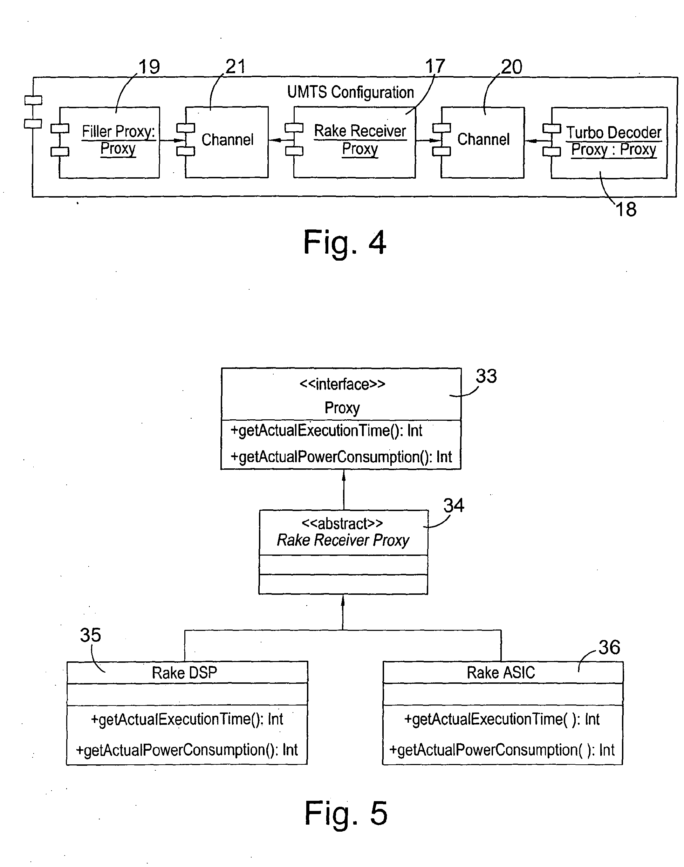

The algorithm map 16 of Figure 3 is shown in further detail in Figure 4. It can be seen that UMTS behaviour is defined using three abstract proxy components: a rake receiver proxy 17, a turbo decoder proxy 18 and a filter proxy 19. The rake receiver proxy 17 is connected to the turbo decoder proxy 18 by an abstract channel component 20. The rake receiver proxy 17 is connected to the filter proxy 19 by an abstract channel component 21.

Referring again to Figure 3, the configuration manager builds and manages a hardware model 22 representing hardware available on the communications terminal which is being configured. This hardware model 22 models each component of the terminal. In the example of Figure 3, it can be seen that the hardware accelerator resources 6 of the terminal comprise a DSP 23 under the control of a DSP manager 24, a configurable computer (CC) 25 (an example of R-HW mentioned above) under the control of a CC Manager 26 and an ASIC 27 under the control of an ASIC manager 28.

The configuration manager 4 must locate in the library 10 (or the remote library 11 of Figure 2), a suitable concrete proxy component for each function defined by an abstract proxy component in the algorithm map of Figure 4. Each concrete proxy component must correspond to a hardware device of the hardware model 22. When suitable concrete proxy components have been located, an application model 29 is created which is a runtime model of concrete proxy components corresponding to the abstract proxy components specified in the algorithm map 16. Each concrete proxy component interfaces with a corresponding component of the hardware model 22 to allow control of the appropriate hardware accelerator resource 6.

The hardware accelerator resources 6 may be configured in different ways. For example, to configure the DSP 23 to provide filter functionality, a block of code 30 written in the DSP's instruction set is executed on the DSP. To configure the CC 25 to implement a rake receiver, suitable configuration data 31 must be provided to the CC, while the ASIC 27 requires suitable parameters 32 to operate as a turbo decoder. The appropriate configuration data is linked to the respective concrete proxy component within the application model 29, and supplied to the appropriate manager in the hardware model 22 for configuration of the corresponding hardware accelerator resource 6.

It can be seen from the description set out above that a concrete proxy component provides an interface as defined by the abstract proxy to which it corresponds, while providing means for addressing a specific hardware accelerator. Thus, the architecture provides a mechanism for addressing a plurality of different hardware implementations of any given component by means of a respective concrete proxy component, each concrete proxy component defining a common interface to higher level functions. Thus, terminal behaviour can be reconfigured using not only DSPs as in the case of conventional software defined radio, but also using hardware accelerator elements such as ASICs or CCs, assuming that an appropriate concrete proxy component is provided. All concrete proxies are handled in the same way by the configuration manager 4, and higher level functions can address components in common manner regardless of their underlying implementations.

The application model 29 is one of the application models 12 of Figure 2, and the hardware model 22 is one of the hardware models 13 of Figure 2. However, if configuration is carried out by the remote configuration manager 9, the application model 29 would then be one of the models 14 of Figure 2 and the hardware model 22 would be one of the models 15 of Figure 2.

Figure 5 is a UML class diagram showing the hierarchical relationships between the components described above. At the top of the hierarchy a Proxy interface 33 which defines two public methods. As in the Java Programming language, interfaces define methods which are implemented by classes declared as implementing the interface. The interface itself contains no more than a method header (similar to a function prototype) with no implementation of the method. The use of interfaces in Java will be readily understood by those skilled in the art, and is described in Flanagan, D.: "Java in a nutshell", 2^{nd} Edition, O'Reilly, 1997, pages 77 to 80, this description is herein incorporated by reference.

Figure 5 shows that an abstract class RakeReceiverProxy 34 implements the Proxy interface. This means that all instances of this class must provide the public methods described above or delegate provision of these methods to its children. Given that the RakeReceiverProxy class is abstract it can never be instantiated itself, but merely serves as an extra layer in the class hierarchy, and can act as a parent of other classes, any class which is a child of RakeReceiverProxy must then implement any methods specified either in the Proxy interface 33 of the RakeReceiverProxy class 34, for which no implementation is provided in the class 33. This use of abstract classes in an object oriented inheritance hierarchy will be readily understood by those skilled in the art, and is described in Java in a Nutshell, referenced above, at pages 49 to 101.

Any class having RakeReceiverProxy as its parent must provide the methods getActualExectionTime() and getActualPowerConsumption() specified by the Proxy interface, given that the RakeReceiverProxy does not implement these methods itself. Thus, the RakeReceiverProxy class delegates implementation of these methods to its children.

In Figure 5, the RakeReceiverProxy class has two child classes RakeDSP 35 and RakeASIC 36. Both these concrete classes implement the getActualExectionTime() and getActualPowerConsumption() specified in the Proxylnterface 33. Any concrete proxy component representing a rake receiver is a child of the abstract class 34. Thus all proxy components representing rake receivers present a unified interface to the outside world.

The RakeDSP class 35 is a concrete proxy component which implements a rake receiver on a DSP. The RakeASIC class 36 is a concrete proxy component which implements a rake receiver on an ASIC. Thus the classes 35, 36 could be included in an application model of the form illustrated in Figure 3.

Referring again to Figure 5, it can be seen that the two methods defined by Proxy interface 33 are public (denoted by the prefix "+"). The first method getActualExecutionTime() returns an integer value which represents the execution time of a component represented by a class implementing the interface in predetermined time units. The second method getActualPowerConsumption() returns an integer value which represents the power consumption of a component represented by a class implementing the interface in predetermined units.

The algorithm map (Figure 4) defines behaviour in terms of a number of communicating abstract proxy components. Additionally, the algorithm map also contains constraint specifications. For example, the algorithm map may specify that the concrete proxy component chosen to implement the rake receiver must have an execution time within certain bounds, and also a power consumption within certain limits.

When selecting a concrete proxy component to implement a function denoted by an abstract proxy component, the configuration manager calls methods provided by the concrete proxy components to obtain actual execution time and power consumption values for that component. The obtained execution time and power consumption values can then be compared with the constraints specified in the algorithm map, to ensure that the components selected by the configuration meet any constraints specified in the algorithm map.

The configuration manager can be sure that all concrete proxy components provide the necessary methods, as these are defined in the top level interface 33 (Figure 5). Thus, the class hierarchy illustrated in Figure 5 provides a convenient way for the configuration manager to manipulate all proxy components in a common manner to obtain power consumption and execution time data which can be compared with constraints specified in the algorithm map.

It will be appreciated that in some embodiments of the invention, a total power consumption constraint may be specified relative to the entire algorithm map 16, and not on individual proxy components. In such a case, the configuration manager must investigate all possible combinations of concrete proxies so as to determine which combinations meet the total power consumption constraint.

It will be appreciated that although execution time and power consumption constraints have been described above, the invention is not limited to such constraints but is instead applicable to any constraint or combination of constraints which are placed upon a system.

In the description set out above, the algorithm map has been described as being implemented in terms of a plurality of abstract proxy components, each of which is an abstract Java class. It will be appreciated that the algorithm map can be implemented in any number of ways which provide the necessary behavioural specification. For example, in some embodiments of the invention, the algorithm map is implemented as a plain text document, written in accordance with a predefined syntax.

It will be appreciated that in some embodiments of the present invention, a plurality of different algorithm maps may be provided, each corresponding to a different functionality which the terminal is to implement. In such embodiments, the terminal can be reconfigured by selecting an appropriate algorithm map from a library and building an application model containing concrete proxy components corresponding to the abstract proxy components of that algorithm map. For example, algorithm maps for both GSM and UMTS functionality can be provided, and the terminal can then be configured to provide either functionality by creating an appropriate application model in the manner described above. It will be appreciated that in some circumstances it may be desirable for a plurality of application models to be created for use in parallel, so that, for example, both GSM and UMTS functionality can be provided concurrently.

Although parts of the description set out above make reference to the Java programming language, it will be readily appreciated by one skilled in the art that any other object oriented programming language could be used in a similar way. Furthermore, the invention is not restricted to an object oriented implementation, but could be implemented, in any suitable computer programming language.

## Claims

1. A method for configuring a computer apparatus comprising:
creating a model of a functionality which the computer apparatus is to implement, said model including at least one constraint which any implementation must satisfy; and
locating at least one software component implementing the functionality specified by the model;
wherein the at least one software component comprises means for returning a value related to the at least one constraint and a component is selected only if said value satisfies said constraint.

2. A method according to claim 1, wherein the model comprises a plurality of communicating abstract proxy components, and the at least one software component comprises a concrete proxy component for each abstract proxy component.

3. A method according to claim 2, wherein each concrete proxy component provides a method which can be called to return a value related to the at least one constraint.

4. A method according to claim 3, wherein each concrete proxy component implements a common interface, and said interface specifies the method.

5. A method according to claim 4, wherein each abstract proxy component is defined as an abstract class which implements the common interface.

6. A method according to claim 5, wherein the or each concrete proxy component corresponding to each abstract proxy component is a child of that abstract proxy component.

7. A method according to any preceding claim, wherein the method is implemented using the Java® programming language.

8. A method according to any preceding claim, wherein the constraint is an execution time constraint.

9. A method according to any preceding claim, wherein the constraint is a power consumption constraint.

10. A method according to any preceding claim, wherein the constraint is specified with reference to the model.

11. A method according to any preceding claim, wherein the constraint is specified with reference to a single component of the model.

12. A method according to any preceding claim, wherein the computer apparatus is a communications terminal.

13. A computer apparatus comprising:
means for creating a model of a functionality which the computer apparatus is to implement, said model including at least one constraint which any implementation must satisfy; and
means for locating at least one software component implementing the functionality specified by the model;
wherein the at least one software component comprises means for returning a value related to the at least one constraint and a component is selected only if said value satisfies said constraint.

14. A computer apparatus according to claim 13, wherein the model comprises a plurality of communicating abstract proxy components, and the at least one software component comprises a concrete proxy component for each abstract proxy component.

15. A computer apparatus according to claim 14, wherein each concrete proxy component provides a method which can be called to return a value related to the at least one constraint.

16. A computer apparatus according claim 15, wherein each concrete proxy component implements a common interface, and said interface specifies the method.

17. A computer apparatus according to claim 16, wherein each abstract proxy component is defined as an abstract class which implements the common interface.

18. A computer apparatus according to claim 17, wherein the or each concrete proxy component corresponding to each abstract proxy component is a child of that abstract proxy component.

19. A computer apparatus according to any one of claims 13 to 18 wherein the constraint is an execution time constraint.

20. A computer apparatus according to any one of claims 13 to 19 wherein the constraint is a power consumption constraint.

21. A computer apparatus according to any one of claims 13 to 20 wherein the constraint is specified with reference to the model.

22. A computer apparatus according to any one of claims 13 to 21 wherein the constraint is specified with reference to a single component of the model.

23. A computer apparatus of any one of claims 13 to 22 wherein the computer apparatus is a communications terminal.

24. A data carrier carrying computer programme code means to cause a computer to:
create a model of a functionality which the computer apparatus is to implement, said model including at least one constraint which any implementation must satisfy; and
locate at least one software component implementing the functionality specified by the model;
wherein the at least one software component comprises means for returning a value related to the at least one constraint and a component is selected only if said value satisfies said constraint.

25. A data carrier carrying computer programme code means to cause a computer to execute procedure in accordance with the method of any one of claims 1 to 12.
